# EUROPÄISCHE PATENTSCHRIFT

(11) **EP 0 855 333 B1**
(45) Veröffentlichungstag und Bekanntmachung des Hinweises auf die Patenterteilung: **08.11.2000**
(21) Anmeldenummer: 97122240.1
(22) Anmeldetag: 17.12.1997
(51) Int. Cl.: B62D 25/20

(54) **Bodenstruktur für eine selbsttragende Kraftfahrzeugkarosserie**
Floor structure of a frameless motor vehicle body
Structure de plancher d'une carrosserie automobile autoporteuse.

(30) Priorität: 25.01.1997 DE 19702669
(43) Veröffentlichungstag der Anmeldung: 29.07.1998
(73) Patentinhaber: DaimlerChrysler AG, 70567 Stuttgart (DE)
(72) Erfinder: Lehner, Josef, 71032 Böblingen (DE)

(56) Entgegenhaltungen:
- DE-A- 2 358 356
- DE-A- 2 435 545
- DE-A- 3 301 708
- GB-A- 2 034 643

## Beschreibung

Die Erfindung betrifft eine Bodenstruktur für eine selbsttragende Kraftfahrzeugkarosserie mit einer sich in Fahrzeuglängsrichtung erstreckenden Tunnelanordnung zur Aufnahme von Triebwerksteilen, sowie mit einer einzelne Triebwerksteile stützenden Triebwerkstraverse, die sich quer über die offene Seite der Tunnelanordnung erstreckt und die mit Hilfe mehrerer Befestigungspunkte relativ zu der Tunnelanordnung festlegbar ist.

Eine solche Bodenstruktur ist aus der DE 24 35 545 B2 bekannt. In der Bodenstruktur der selbsttragenden Kraftfahrzeugkarosserie ist ein Mitteltunnel als rinnenförmige Vertiefung geformt, der sich in Fahrzeuglängsrichtung erstreckt. Im Übergangsbereich der seitlichen Tunnelwandungen zu der horizontalen Bodenstruktur sind den gegenüberliegenden Tunnelwandungen Verstärkungsprofile zugeordnet, an denen von unten her eine Triebwerkstraverse zur Stützung einer aus Triebwerksteilen bestehenden Getriebeanordnung festgelegt ist. Bei Aufprallbelastungen auf die Kraftfahrzeugkarosserie in Fahrzeugquerrichtung kann die als Getriebebrücke dienende Triebwerkstraverse aufgrund der hohen auftretenden Belastungen im Bereich ihrer Befestigungspunkte ausreißen.

Aufgabe der Erfindung ist es, eine Bodenstruktur der eingangs genannten Art zu schaffen, die ein Ausreißen der Triebwerkstraverse zumindest weitgehend verhindert.

Diese Aufgabe wird dadurch gelöst, daß an der Triebwerkstraverse zwei einander gegenüberliegende Stützprofile kraftübertragend festgelegt sind, die jeweils einen sich längs einer seitlichen Tunnelwand der Tunnelanordnung erstreckenden, parallel zu dieser in geringem Abstand angeordneten, formsteifen Stützschenkel aufweisen, der sich - auf die Fahrzeuglängsrichtung bezogen - zumindest über einen Teil der Länge der Triebwerkstraverse erstreckt. Durch das Vorsehen der steifen Stützprofile und die kraftübertragende Festlegung an der Triebwerkstraverse wirken Kräfte, die durch Aufprallbelastungen in Fahrzeugquerrichtung auf die Triebwerkstraverse ausgeübt werden, nicht mehr ausschließlich auf die Befestigungspunkte, sondern werden über die bereits bei einer geringen Verformung der Bodenstruktur erfolgende flächige Anlage der Stützprofile an der jeweiligen seitlichen Tunnelwand in die Bodenstruktur übertragen. Dadurch wird zuverlässig ein Ausreißen der Triebwerkstraverse im Bereich der Befestigungspunkte verhindert. Durch die Stützprofile wird zusätzlich auch die Tunnelanordnung insgesamt versteift. Die kraftübertragende Festlegung der steifen Stützprofile an der Triebwerkstraverse kann durch alle Arten von bekannten Befestigungsmöglichkeiten vorgesehen sein, solange diese kraftübertragende Verbindung eine höhere Festigkeit aufweist als die Anbindung der Triebwerkstraverse im Bereich der Befestigungspunkte an entsprechenden Abschnitten der Bodenstruktur relativ zu der Tunnelanordnung. Der Begriff der kraftübertragenden Festlegung bedeutet somit, daß die Festlegung der Stützprofile an der Triebwerkstraverse wesentlich stärker ausgelegt sein muß als die Festlegung der Triebwerkstraverse relativ zu der Tunnelanordnung. Durch die Anordnung der Stützschenkel parallel und in geringem Abstand zu der korrespondierenden Tunnelwand wird bereits bei geringen Verformungen der Bodenstruktur die flächige Anlage der Stützschenkel an der jeweiligen Tunnelwand und damit eine Flächenpressung erzielt. Das Merkmal, daß sich der Stützschenkel zumindest über einen Teil der Länge der Triebwerkstraverse erstrecken muß, bezieht sich auf die Erstreckung in Fahrzeuglängsrichtung, die auch als Breite der Triebwerkstraverse bezeichnet wird. Die Längenerstreckung muß so groß bemessen sein, daß sich keine punktförmige, sondern vielmehr eine Flächenbelastung der Tunnelwand bei entsprechenden Verformungen der Bodenstruktur ergibt. Eine besonders bevorzugte erfindungsgemäße Ausführungsform sieht eine Länge der Stützschenkel vor, die der Länge der Triebwerkstraverse - als Erstreckung in Fahrzeuglängsrichtung gese-hen - entspricht.

In Ausgestaltung der Erfindung ist eine vordere und eine hintere Stirnseite - auf die Fahrzeuglängsrichtung bezogen - jedes Stützschenkels mit einem sich in Fahrzeugquerrichtung erstreckenden Verstärkungsflansch versehen. Dadurch wird die Steifigkeit jedes Stützschenkels weiter erhöht.

In weiterer Ausgestaltung der Erfindung ragt von jedem Verstärkungsflansch eine Versteifungsrippe rechtwinklig ab, die sich über die gesamte Länge jedes Verstärkungsflansches erstreckt. Dadurch wird die Eigensteifigkeit jedes Stützprofiles weiter erhöht.

Weitere Vorteile und Merkmale der Erfindung ergeben sich aus den Unteransprüchen sowie aus der nachfolgenden Beschreibung eines bevorzugten Ausführungsbeispiels der Erfindung, das anhand der Zeichnungen dargestellt ist.
- Fig. 1: zeigt in einer Seitenansicht eine vordere Hälfte eines Kraftfahrzeugs, das mit einer Ausführungsform einer erfindungsgemäßen Bodenstruktur versehen ist,
- Fig. 2: einen Schnitt durch die Bodenstruktur des Kraftfahrzeugs nach Fig. 1 entlang der Schnittlinie II-II in Fig. 1, wobei die Triebwerksteile nicht dargestellt sind, und

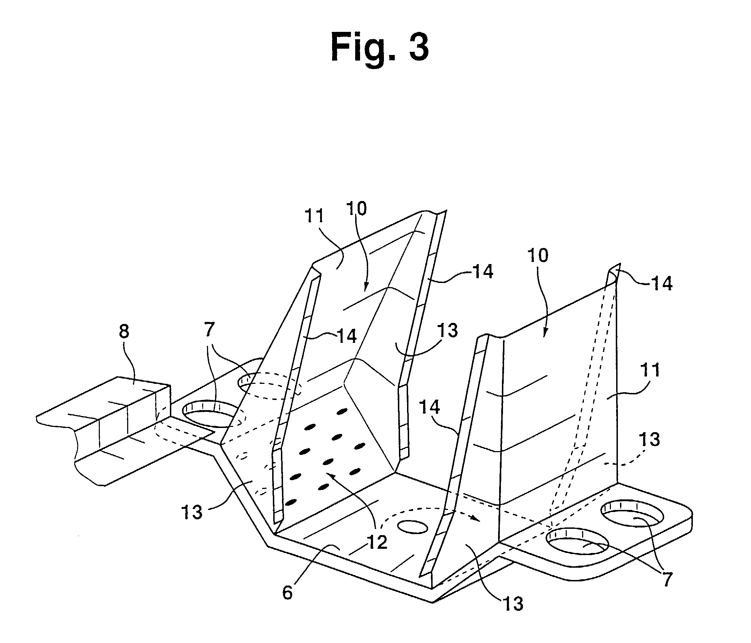

- Fig. 3: die Triebwerkstraverse nach Fig. 2 in perspektivischer Darstellung.

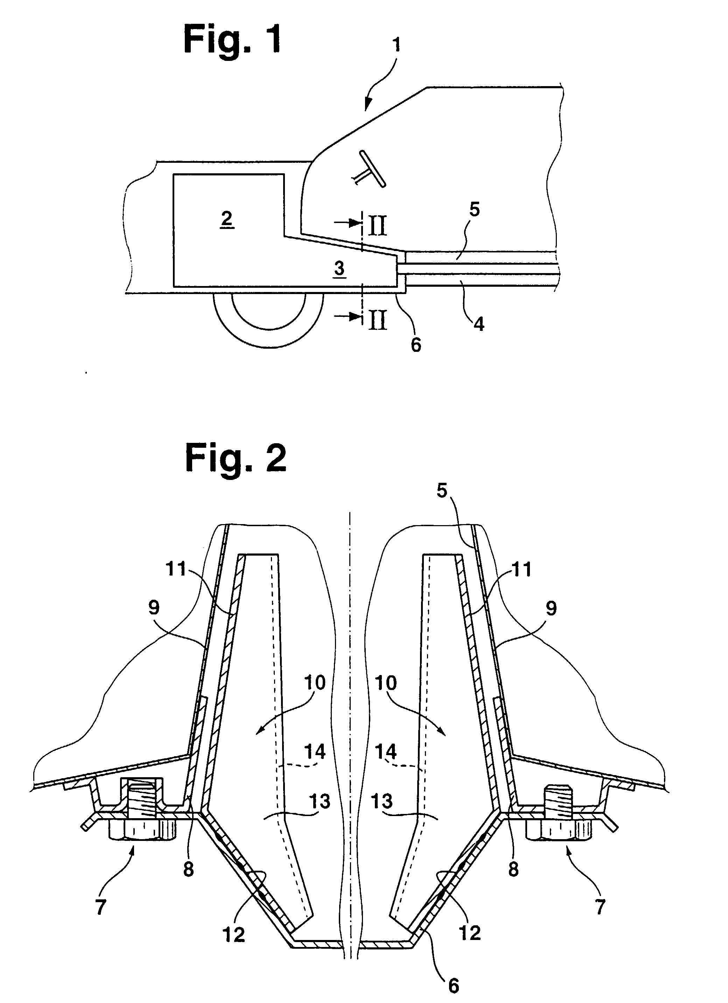

Ein Personenkraftwagen 1 nach Fig. 1 weist in einem Frontbereich einen Motorraum auf, in dem ein als Triebwerksteil dienendes Antriebsaggregat 2 angeordnet ist. In Fahrzeuglängsrichtung nach hinten schließt an dieses Antriebsaggregat 2 ein ebenfalls aus Triebwerksteilen bestehendes Getriebe 3 an, von der aus sich eine als Triebwerksteil dienende Kardanwelle 4 in Fahrzeuglängsrichtung nach hinten erstreckt. Zur Aufnahme des Getriebes 3 und der Kardanwelle 4 ist in einer Bodenstruktur einer selbsttragenden Karosserie des Personenkraftwagens 1 in an sich bekannter Weise ein Mitteltunnel 5 vorgesehen, der rinnenartig in einen Fahrzeuginnenraum hinein ausgebuchtet ist und sich in Fahrzeuglängsrichtung über die gesamte Länge einer Fahrgastzelle der Karosserie erstreckt. Der Mitteltunnel 5 weist zwei einander gegenüberliegende und in Fahrzeuglängsrichtung verlaufende Seitenwandungen 9 auf. Zu einer Unterseite der Bodenstruktur hin und damit zur Unterseite des Personenkraftwagens 1 ist der Mitteltunnel 5 offen.

Auf Höhe des Getriebes 3 ist von unten an der Bodenstruktur eine als Triebwerkstraverse dienende Getriebebrücke 6 festgelegt, die das Getriebe 3 von unten her stützt. Die Getriebebrücke 6 ist als Trägerteil gestaltet und erstreckt sich quer zur Fahrzeuglängsrichtung über die Breite des Mitteltunnels 5. Die Getriebebrücke 6 weist ein V-artiges Profil auf und ist mittels seitlicher Befestigungsflansche durch mehrere Schraubverbindungen an Verstärkungsblechen 8 auf beiden Seiten des Mitteltunnels 5 festgelegt. Die Verstärkungsbleche 8 sind kastenartig gestaltet und mit der jeweils korrespondierenden seitlichen Tunnelwandung 9 und nach außen mit einer Unterseite der Bodenstruktur verschweißt. Beim dargestellten Ausführungsbeispiel ist die Getriebebrücke 6 auf jeder Seite mit Hilfe von zwei Befestigungspunkten über Schraubverbindungen 7 an dem jeweiligen Verstärkungsblech 8 und damit auch an der Bodenstruktur und an der Tunnelwand 9 festgelegt.

Um bei in Fahrzeugquerrichtung aufgrund von seitlichen Aufprallbelastungen auf den Personenkraftwagen 1 auftretenden Kräften ein Ausreißen der Getriebebrücke 6 im Bereich der Befestigungspunkte mit der Bodenstruktur zu verhindern, ist auf beiden Seiten der Getriebebrücke 6, jeweils einer der beiden Tunnelwandungen 9 zugeordnet, ein Stützprofil 10 vorgesehen. Die beiden Stützprofile 10 sind spiegelsymmetrisch zueinander auf der Getriebebrücke 6 festgelegt und sind jeweils als Winkelprofil gestaltet. Jedes Stützprofil 10 entspricht in seiner Erstreckung in Fahrzeuglängsrichtung der Erstreckung der Getriebebrücke 6 in Fahrzeuglängsrichtung. Jedes Stützprofil 10 weist einen Auflageschenkel 12 auf, der über seine gesamte Fläche auf einer zugeordneten, schrägen und ebenen Fixierfläche der Getriebebrücke 6 aufliegt und durch Punktschweißung flächig mit der Getriebebrücke 6 verbunden ist. Von jedem Auflageschenkel 12 ragt ein Stützschenkel 11 frei nach oben ab, der sich im montierten Zustand der Getriebebrücke 6 in Fahrzeuglängsrichtung parallel zu der benachbarten Tunnelwandung 9 in geringem Abstand zu dieser erstreckt. Um dem Stützschenkel 11 jedes Stützprofiles 10 eine hohe Steifigkeit zu verleihen, ist die - in Fahrzeuglängsrichtung gesehen - vordere Stirnseite und hintere Stirnseite jedes Stützprofiles 10 mit einem Verstärkungsflansch 13 versehen, die sich quer zur Fahrzeuglängsrichtung über die gesamte Höhe jedes Stützprofiles 10 erstrecken. Um die Eigensteifigkeit jedes Stützprofiles 10 weiter zu erhöhen, ist außerdem jedem Verstärkungsflansch 13 eine in Fahrzeuglängsrichtung von dem Stützprofil 10 aus nach außen, d.h. nach vorne oder nach hinten, abragende Versteifungsrippe 14 zugeordnet, die sich von einem inneren Rand jedes Verstärkungsflansches aus rechtwinklig abragend in Fahrzeuglängsrichtung erstreckt und über die gesamte Höhe jedes Verstärkungsflansches 13 verläuft. Jedes Stützprofil 10 ist als einstückiges Bauteil gestaltet und entweder als Stahlblechkonstruktion oder als Aluminiumbauteil hergestellt.

Die Verbindung jedes Stützprofiles 10 im Bereich seines Auflageschenkels 12 mit der Getriebebrücke 6 ist so stabil, daß bei Aufprallbelastungen in Fahrzeugquerrichtung auf die Bodenstruktur auftretenden Kräfte zwischen den Tunnelwandungen 9 und den Stützschenkeln 11 jedes Stützprofiles 10 weitergeleitet werden, wodurch die Schraubverbindungen 7 im Bereich der Befestigungspunkte entlastet werden. Ein Ausreißen der Getriebebrücke 6 bei einer solchen Aufprallbelastung kann daher zuverlässig verhindert werden. Zusätzlich dienen die Stützprofile 10 zur Erhöhung der Steifigkeit des Mitteltunnels 5 und damit auch zur Erhöhung der Steifigkeit der gesamten Bodenstruktur.

## Patentansprüche

1. Bodenstruktur für eine selbsttragende Kraftfahrzeugkarosserie mit einer zu einer Seite offenen, sich in Fahrzeuglängsrichtung erstreckenden Tunnelanordnung (5) zur Aufnahme von Triebwerksteilen sowie mit einer einzelne Triebwerksteile stützenden Triebwerkstraverse (6), die sich quer über die offene Seite der Tunnelanordnung (5) erstreckt und die mit Hilfe mehrerer Befestigungspunkte relativ zu der Tunnelanordnung festlegbar ist,
**dadurch gekennzeichnet**,
daß an der Triebwerkstraverse (6) zwei einander gegenüberliegende Stützprofile (10) durch eine Verbindung mit höherer Festigkeit als die Befestigung der Triebwerkstraverse (6) relativ zu der Tunnelanordnung (5) festgelegt sind, die jeweils einen sich längs einer seitlichen Tunnelwand (9) der Tunnelanordnung (5) erstreckenden, parallel zu dieser in geringem Abstand angeordneten, formsteifen Stützschenkel (11) aufweisen, der sich - auf die Fahrzeuglängsrichtung bezogen - zumindest über einen Teil der Länge der Triebwerkstraverse (6) erstreckt.

2. Bodenstruktur nach Anspruch 1,
**dadurch gekennzeichnet**,
daß eine vordere und eine hintere Stirnseite - auf die Fahrzeuglängsrichtung bezogen - jedes Stützprofiles (10) mit einem sich in Fahrzeugquerrichtung erstreckenden Verstärkungsflansch (13) versehen ist.

3. Bodenstruktur nach Anspruch 2,
**dadurch gekennzeichnet,**
daß von jedem Verstärkungsflansch (13) eine Versteifungsrippe (14) rechtwinklig abragt, die sich über die gesamte Länge jedes Verstärkungsflansches (13) erstreckt.

4. Bodenstruktur nach Anspruch 1,
**dadurch gekennzeichnet**,
daß die Stützprofile (10) durch Verschweißung an der Triebwerkstraverse (6) festgelegt sind.

5. Bodenstruktur nach Anspruch 1,
**dadurch gekennzeichnet**,
daß die Stützprofile (10) aus Aluminium oder Stahl hergestellt sind.

## Claims

1. Floor structure for a self-supporting motor-vehicle body, having a tunnel arrangement (5) which is open to one side, extends in the longitudinal direction of the vehicle and is intended for receiving power-unit parts, and having a power-unit crossmember (6) which supports individual power-unit parts, extends transversely over the open side of the tunnel arrangement (5) and can be secured relative to the tunnel arrangement with the aid of a plurality of fastening points, characterized in that two mutually opposite supporting profiles (10) are secured on the power-unit crossmember (6) by a connection which is of higher strength than the fastening of the power-unit crossmember (6) relative to the tunnel arrangement (5) and each has a dimensionally rigid supporting leg (11) which extends along a lateral tunnel wall (9) of the tunnel arrangement (5), is arranged parallel to said tunnel wall, at a small distance therefrom, and - in relation to the longitudinal direction of the vehicle - extends at least over part of the length of the power-unit crossmember (6).

2. Floor structure according to Claim 1, characterized in that a front end side and a rear end side - in relation to the longitudinal direction of the vehicle - of each supporting profile (10) are provided with a reinforcement flange (13) which extends in the transverse direction of the vehicle.

3. Floor structure according to Claim 2, characterized in that a stiffening rib (14) projects at right angles from each reinforcement flange (13) and extends over the entire length of each reinforcement flange (13).

4. Floor structure according to Claim 1, characterized in that the supporting profiles (10) are secured on the power-unit crossmember (6) by welding.

5. Floor structure according to Claim 1, characterized in that the supporting profiles (10) are produced from aluminium or steel.

## Revendications

1. Structure de plancher pour une carrosserie autoporteuse de véhicule automobile, avec un dispositif à tunnel (5) ouvert sur un côté, s'étendant dans la direction longitudinale du véhicule, pour supporter des éléments de train moteur, ainsi qu'avec une traverse de train moteur (6), soutenant différents éléments du train moteur, s'étendant transversalement sur le côté ouvert du dispositif de tunnel (5) et susceptible d'être fixée par rapport au dispositif de tunnel à l'aide de plusieurs points de fixation,
caractérisée en ce que
deux profilés d'appui (10) opposés l'un à l'autre sont fixés sur la traverse de train moteur (6), au moyen d'une liaison à résistance supérieure à celle de la fixation de train moteur (6) par rapport au dispositif de tunnel (5), les profilés d'appui présentant chacun une branche d'appui (11) à rigidité de forme, s'étendant le long d'une paroi de tunnel (9) du dispositif de tunnel (5), à faible distance et parallèlement à celle-ci, la branche d'appui (11) s'étendant - en se référant à la direction longitudinale du véhicule - au moins sur une partie de la longueur de la traverse de train moteur (6).

2. Structure de plancher selon la revendication 1, caractérisée en ce qu'une face frontale avant et une face frontale arrière - en se référant à la direction longitudinale du véhicule - de chaque profilé d'appui (10) sont munies d'une plaque de renforcement (13) s'étendant dans la direction transversale du véhicule.

3. Structure de plancher selon la revendication 2, caractérisée en ce qu'une nervure de rigidification (14), qui s'étend sur toute la longueur de chaque plaque de renforcement (13), fait saillie à angle droit de chaque plaque de renforcement (13).

4. Structure de plancher selon la revendication 1, caractérisée en ce que les profilés d'appui (10) sont fixés par soudage sur la traverse de train moteur (6).

5. Structure de plancher selon la revendication 2, caractérisée en ce que les profilés d'appui (10) sont fabriqués en aluminium ou en acier.
